# EUROPEAN PATENT APPLICATION

(11) **EP 2 781 327 A1**
(43) Date of publication of application: **24.09.2014**
(21) Application number: 11875846.5
(22) Date of filing: 16.11.2011
(51) Int. Cl.: B29C 43/10, B29C 33/40, B29C 43/52

(54) **MOLDING DEVICE AND MANUFACTURING METHOD FOR THERMOPLASTIC MOLDING**

(71) Applicant: JSR Corporation, Minato-ku, Tokyo 105-8640 (JP)
(72) Inventor: KURIHARA Fumio, Tokyo 105-0021 (JP)
(74) Representative: Kramer - Barske - Schmidtchen
(86) International application number: PCT/JP2011/076363
(87) International publication number: WO 2013/073015

(57) **Abstract**

A light-irradiation molding apparatus 1 includes: a pair of rubber mold portions 2A and 2B each including rubber material having a property of transmitting light X and forming a cavity 20 on respective opposing sides that are fitted together; and light irradiation means 4 for providing light X irradiation to particulate thermoplastic resin 6 placed in the cavity 20, through a surface of the pair of rubber mold portions 2A and 2B. The light-irradiation molding apparatus 1 is configured to bring the pair of rubber mold portions 2A and 2B close to each other while melting the thermoplastic resin 6 placed in the cavity 20 by the light X irradiation provided by the light irradiation means 4 to mold a molded product 7 of the thermoplastic resin 6 in the cavity 20 with a reduced volume.

## Description

### TECHNICAL FIELD

The present invention relates to a molding apparatus that reduces a volume of a cavity of a mold to mold a molded product from thermoplastic resin placed in the cavity, and a thermoplastic molded product manufacturing method.

### BACKGROUND ART

There are various molding methods for obtaining a molded product having a predetermined shape using thermoplastic resin, generally including injection molding, blow molding, extrusion molding and press molding.

Apart from these general molding methods, for example, Patent Literature 1 discloses a method in which when melted thermoplastic resin is charged into a cavity of a mold, irradiation of electromagnetic wave including a wavelength range of 0.78 to 2 µm is applied to the thermoplastic resin through the mold. In this method, because of a difference in physical property between rubber included in the mold and the thermoplastic resin, the thermoplastic resin is heated more intensely compared to the rubber mold.

Also, for example, Patent Literature 2 discloses that irradiation of electromagnetic wave including a wavelength range of 0.78 to 2 µm is applied to particulate thermoplastic resin charged in a cavity of a rubber mold to heat and thereby melt the thermoplastic resin and subsequently additionally charging melted thermoplastic resin into a remaining space of the cavity.

### PRIOR ART DOCUMENT

### Patent Literature

Patent Literature 1: JP-A-2007-216447
Patent Literature 2: JP-A-2009-241455

### SUMMARY OF THE INVENTION

### PROBLEM TO BE SOLVED BY THE INVENTION

However, in Patent Literature 1, in order to charge thermoplastic resin melted in advance into a cavity of a mold, an apparatus for melting a thermoplastic resin in a state of particles such as pellets or a lump state is required. Also, in Patent Literature 2, in order to additionally charge melted thermoplastic resin, an apparatus similar to the above is required. Furthermore, when charging melted thermoplastic resin, it is necessary to secure an extra amount of thermoplastic resin, making it difficult to reduce use of thermoplastic resin.

The present invention has been made in view of such conventional problems, and is intended to provide a molding apparatus that eliminates the need for an apparatus that melts thermoplastic material in advance and charges the thermoplastic material into a cavity and is thus capable of molding a molded product using a small amount of thermoplastic material, and a thermoplastic molded product manufacturing method.

### MEANS FOR SOLVING THE PROBLEM

One aspect of the present invention provides a molding apparatus including: a mold including inside a cavity for placing solid thermoplastic material therein, the cavity being configured to be variable in volume; heating means for heating and thereby melting the thermoplastic material placed in the cavity; and pressure application means for applying pressure to the mold so as to reduce the volume of the cavity.

Another aspect of the present invention provides a method for manufacturing a thermoplastic molded product, the method including: a placement step of placing solid thermoplastic material in a cavity of a mold; a heating step of heating and thereby melting the thermoplastic material; a pressure application step of applying pressure to the mold so as to reduce a volume of the cavity; and a cooling step of cooling and thereby solidifying the melted thermoplastic material, wherein the pressure application step is performed when the heating step and the cooling step are performed and is continued until completion of the cooling step.

### ADVANTAGEOUS EFFECTS OF THE INVENTION

In the molding apparatus, a molded product is obtained by reducing a volume of a cavity when heating thermoplastic material in the cavity.

In the molding apparatus, when heating and thereby melting solid thermoplastic material placed in the cavity of the mold via the heating means, the volume of the cavity is reduced by the pressure application means. When solid thermoplastic material is placed in the cavity, voids are formed between surfaces forming the cavity and the thermoplastic material, and between plural pieces of the thermoplastic material. Reducing the volume of the cavity when heating and thereby melting the thermoplastic material eliminates almost all of the voids, enabling molding a molded product of thermoplastic material having a shape following a shape of the cavity after the volume reduction. The molded product can be demolded from the mold after cooling and thereby solidifying the molded product.

Therefore, the molding apparatus eliminates the need for an apparatus that melts thermoplastic material in advance and injects the thermoplastic material into the cavity, enabling molding a molded product using a small amount of thermoplastic material.

If lump thermoplastic material is used, it is possible to place the lump thermoplastic material in a part of the cavity and particulate thermoplastic material in a remaining part.

In the thermoplastic molded product manufacturing method, a molded product is obtained by reducing the volume of the cavity when heating thermoplastic material in the cavity.

In the manufacturing method, the pressure application step is performed when the heating step is performed after the placement step. Then, the pressure application step is performed also when the cooling step is performed and is continued until completion of the cooling step. Consequently, the cavity volume-reduced state provided by the pressure application step is maintained during a period of time from around a start of melting of at least a part of thermoplastic material until the melted thermoplastic material is cooled and thereby solidified. Thus, a shape of the cavity after the volume reduction can be maintained until the thermoplastic material is solidified. Then, leakage of the melted thermoplastic material and deformation of the thermoplastic material at the time of cooling and solidification are minimized, enabling a molded product of thermoplastic material following the shape of the cavity after the volume reduction to be molded with good accuracy.

Therefore, the thermoplastic molded product manufacturing method eliminates the need for an apparatus that melts thermoplastic material in advance and injects the thermoplastic material into the cavity, enabling molding a molded product using a small amount of thermoplastic material. Also, a molded product of the thermoplastic material can be formed with good accuracy.

When lump thermoplastic material is used, it is possible to place the lump thermoplastic material in a part of the cavity and particulate thermoplastic material in a remaining part.

### BRIEF DESCRIPTION OF THE DRAWINGS

[Figure 1] Figure 1 is an illustrative diagram showing a front cross-sectional view of a state in which thermoplastic resin is placed in a cavity between a pair of rubber mold portions disposed at respective original positions in Example 1.
[Figure 2] Figure 2 is an illustrative diagram of showing a side cross-sectional view of a state in which thermoplastic resin is placed in a cavity between a pair of rubber mold portions disposed at respective original positions in Example 1.
[Figure 3] Figure 3 is an illustrative diagram showing a top cross-sectional view of an arrangement of a suction port and a plurality of suction gates in a one-side rubber mold portion in Example 1.
[Figure 4] Figure 4 is an illustrative diagram showing a front cross-sectional view of a state in which thermoplastic resin irradiated with light melts and a pair of rubber mold portions slightly come close to each other in Example 1.
[Figure 5] Figure 5 is an illustrative diagram showing a front cross-sectional view of a state in which thermoplastic resin irradiated with light melts and a pair of rubber mold portions come closest to each other in Example 1.
[Figure 6] Figure 6 is an illustrative diagram showing a front cross-sectional view of a molded product in Example 1.
[Figure 7] Figure 7 is a graph indicating light transmittances of silicone rubbers in Example 1.
[Figure 8] Figure 8 is an illustrative diagram showing a side cross-sectional view of a state in which thermoplastic resin is placed in a cavity between another pair of rubber mold portions in Example 1.
[Figure 9] Figure 9 is an illustrative diagram showing a front cross-sectional view of a pair of rubber mold portions at respective original positions in Example 2.
[Figure 10] Figure 10 is an illustrative diagram showing a front cross-sectional view of a state in which thermoplastic resin irradiated with light melts and a pair of rubber mold portions are partially brought close to each other in a sequential manner in Example 2.

### MODE FOR CARRYING OUT THE INVENTION

A preferable embodiment of the molding apparatus and the thermoplastic molded product manufacturing method stated above will be described.

For the thermoplastic material, one in a solid form is used. Here, the solid form may be a particulate form or a lump form. The particulate form may be a powder form, and the lump form may be a sheet form or a block form. The particulate form refers to a form of, e.g., spheres, cylinders or other indefinite shapes that can be seen in a crushed product. The lump form refers to a form of, e.g., a plate, a stick or a line.

Depending on the intended shape of the molded product, particulate or lump thermoplastic material can arbitrarily be selected. Also, a mixture of two or more forms of solid thermoplastic material may be used.

If the thermoplastic material has a particulate form, while an available particulate diameter of thermoplastic material depends on the thickness of the molded product to be molded, that is, the width of the cavity, the particulate diameter of thermoplastic material can be in the range of 1 to 3000 µm. The particulate diameter of thermoplastic material is preferably in the range of 50 to 3000 µm, and more preferably in the range of 200 to 2500 µm.

Also, thermoplastic material having an average particulate diameter falling within these ranges and further containing small particles in the range of 1 to 100 µm may be preferable to be charged into a cavity. A bulk specific gravity of the particles is preferably no less than 0.4, more preferably no less than 0.45 and even more preferably no less than 0.5.

In the molding apparatus, the pressure application means can be configured to continue the application of the pressure to the mold at least from before a start of the melting of the thermoplastic material until a start of a decrease in temperature of the thermoplastic material.

In this case, the shape of the cavity after the volume reduction can be maintained at least until the start of a decrease in temperature of the thermoplastic material. Then, a molded product of the thermoplastic material can be formed with good accuracy.

Also, whether or not the temperature of the thermoplastic material has started decreasing can be determined by an actual temperature of the material. However, it is often difficult to perceive correct temperature change in the mold. Therefore, a point of time when heating by the heating means has been ended may be regarded as a start of a decrease in temperature of the thermoplastic material. Also, a point of time when cooling by the later-described cooling means has been started may be regarded as a start of a decrease in temperature of the thermoplastic material.

Also, the pressure application means can be configured to continue the application of the pressure to the mold until the melted thermoplastic material is solidified.

In this case, the shape of the cavity after the volume reduction can be maintained until the thermoplastic material is solidified. Then, a molded product of thermoplastic material following the shape of the cavity after the volume reduction can be molded with good accuracy.

Also, the mold can be formed to have a structure capable of reducing the volume of the cavity, and the pressure application means can be an apparatus that depressurizes the cavity, other than an apparatus that externally and mechanically applies pressure to the mold.

In this case, as a result of the cavity being depressurized, the volume of the cavity can be reduced using a difference in pressure between the outside of the mold and the inside of the cavity.

The mold can be divided into a plurality of mold parts to have a structure that when the mold parts are brought close to each other, reduces the volume of the cavity formed between surfaces of the plurality of the mold parts to be fitted together.

The mold can be formed from rubber in its entirety, the rubber being an elastic member that is elastically deformable. In this case, the mold can easily be divided into a plurality of parts along a partition surface from which the cavity is opened, making manufacture of the mold easy. Also, the volume of the cavity can be reduced using elastic deformation of the rubber.

Also, the mold can be formed from, e.g., ceramic in its entirety. In this case, the volume of the cavity can be reduced by employing a structure that brings mold parts, which results from the mold being divided into the plurality of parts, close to each other.

Also, the mold can be formed by placing an inner mold part including an elastic member that is elastically deformable in a rigid outer mold part.

Also, the pressure application means can be an apparatus that externally applies pressure to the mold.

In this case, the volume of the cavity can be reduced by the pressure applied from the outside of the mold.

Also, the heating means can be an apparatus that provides electromagnetic wave irradiation to be absorbed by at least one of the thermoplastic material and a surface of the mold, the surface forming the cavity.

In this case, the thermoplastic material can be heated and thereby melted by making the thermoplastic material absorb the electromagnetic wave, enabling simplification of the configuration of the apparatus for molding a molded product. For the apparatus that provides electromagnetic wave irradiation, electromagnetic wave (light) irradiation means for providing irradiation of electromagnetic wave (light) including a wavelength range (near-infrared range) of 0.78 to 2 µm or irradiation of electromagnetic wave (light) including a wavelength range (microwave range or high-frequency range) of 0.01 to 100 m can be used.

In the present specification, electromagnetic wave is a broad concept including light, and the wavelength of the electromagnetic wave is not limited as long as such electromagnetic wave can heat the thermoplastic material.

Also, the molding apparatus can further include cooling means for cooling the thermoplastic material.

In this case, the heated and melted thermoplastic material can be quickly cooled by cooling means, enabling reduction in time required for molding a molded product of the thermoplastic material.

The cooling means can be, e.g., a blower fan that makes air blow against the mold, a heat exchanger or a heat exchange element that cools the mold using vaporization heat or a cooling chamber cooled to a predetermined temperature or lower, other than a contact heat exchanger that brings, e.g., a metal plate that can circulate a refrigerant therein into contact with an object to be cooled.

In the aforementioned thermoplastic molded product manufacturing method, the mold can be formed to have a structure capable of reducing the volume of the cavity, and the pressure application step can be performed by depressurizing the cavity.

In this case, as a result of the cavity being depressurized, the volume of the cavity can be reduced by using a difference in pressure between the outside of the mold and the inside of the cavity.

The mold can include rubber material having a property of transmitting electromagnetic wave. Also, the mold can include a pair of mold parts, and the cavity can be formed on respective opposing sides of the pair of mold parts to be fitted together. Use of the pair of mold parts enables to easily provide a structure that reduces the volume of the cavity of the mold.

The heating means may be electromagnetic wave irradiation means for providing electromagnetic wave irradiation to the solid thermoplastic material placed in the cavity through a surface of the pair of mold parts.

The pressure application means can have a structure that when melting the thermoplastic material placed in the cavity via electromagnetic wave irradiation provided by the electromagnetic wave irradiation means, brings the pair of mold parts close to each other to reduce the volume of the cavity.

For the electromagnetic wave (light) provided by the electromagnetic wave irradiation means, electromagnetic wave (light) having a wide wavelength range can be used.

For the electromagnetic wave, electromagnetic wave (near-infrared light) including a wavelength range of 0.78 to 2 µm. In this case, a ratio of the electromagnetic wave including a wavelength range of 0.78 to 2 µm transmitted by the mold and absorbed by the thermoplastic material is large compared to a ratio of the electromagnetic wave absorbed by the mold, and thus, the electromagnetic wave can easily heat the thermoplastic material more intensely than the mold. In this case, the mold can include transparent rubber material. Also, the mold can include semitransparent rubber material as long as such semitransparent rubber material has an electromagnetic wave transmission property.

The electromagnetic wave provided by the electromagnetic wave irradiation means may include electromagnetic wave other than the near-infrared light.

Also, for the electromagnetic wave (light), electromagnetic wave (microwave or high-frequency wave) including a wavelength range of 0.01 to 100 m can be used. In this case, dielectric heating of the mold and the thermoplastic material is performed by electromagnetic wave including a wavelength range of 0.01 to 100 m, and a dielectric loss in the thermoplastic material is larger than that in the mold, thereby facilitating heating the thermoplastic material more intensely than the mold. In this case, it is sufficient that the mold has the property of transmitting at least a part of the electromagnetic wave of the aforesaid wavelength range, and the mold can include rubber material having any of various color combinations, other than transparent or semitransparent rubber material.

The electromagnetic wave provided by the electromagnetic wave irradiation means may include electromagnetic wave other than the microwave or the high-frequency wave.

Also, the electromagnetic wave irradiation means can be an apparatus that provides near-infrared light (wavelength of 0.78 to 2 µm), microwave (wavelength of 0.01 to 1 m) or high-frequency wave (wavelength of 1 to 100 m).

Also, the thermoplastic material can be a thermoplastic resin. For the thermoplastic resin (which, hereinafter, may simply be referred to as "thermoplastic resin"), one having a property of absorbing electromagnetic wave and being thereby heated can be used.

The thermoplastic resin is not specifically limited as long as the thermoplastic resin includes a polymer having thermoplasticity, and examples of the thermoplastic resin include, e.g., rubber-reinforced styrene-type resins such as ABS resins (acrylonitrile butadiene styrene resins), ASA resins (acrylate styrene acrylonitrile resins) and AES resins (acrylonitrile ethylene-propylene-diene styrene resins), styrene-type resins such as polystyrene, styrene acrylonitrile copolymers, styrene maleic anhydride copolymers and (meta)acrylic acid ester styrene copolymers, olefin-type resins such as polyethylene and polypropylene, cyclic olefin resins, acrylic-type resins, polycarbonate resins, polyester-type resins, polyamide-type resins, vinyl chloride-type resins, polyarylate resins, polyacetal resins, polyphenylene ether resins, polyphenylene sulfide resins, fluorine resins, imide-type resins, ketone-type resins, sulfone-type resins, urethane-type resins, polyvinyl acetate, polyethylene oxide, polyvinyl alcohol, polyvinyl ether, polyvinyl butyral, phenoxy resins, photosensitive resins, liquid-crystal polymers and biodegradable plastic. One of these can be used alone or two or more of these can be used in combination.

From among the aforementioned thermoplastic resins, examples of thermoplastic resins that are preferable for use in electromagnetic wave (light) irradiation molding include, e.g., rubber-reinforced styrene-type resins, olefin-type resins, acrylic-type resins, polyester-type resins, polyamide-type resins, polyester-type resin-polycarbonate resin alloys, rubber-reinforced styrene-type resin-polycarbonate resin alloys, and rubber-reinforced styrene-type resin-polyester-type resin alloys.

Furthermore, it is preferable that the thermoplastic resin be an amorphous thermoplastic resin.

Where the mold is formed of rubber material, a rate of cooling the thermoplastic resin is low compared to a case where the mold is a metal mold. Thus, use of a high-crystallinity thermoplastic resin causes advancement of crystal growth during cooling, resulting in a decrease in dimensional accuracy and/or impact resistance of the resulting molded product. On the other hand, where an amorphous thermoplastic resin is employed for the thermoplastic resin, such decrease in dimensional accuracy and/or impact resistance, etc., of the molded product may be prevented.

The thermoplastic resin may further contain an additive such as a filler of, e.g., a fibrous form, a particulate form or a plate-like form, a decorating agent such as a metallic pigment, an ultraviolet absorber, an antioxidant, an anti-aging agent, an antistat, a flame retardant, an anti-weathering agent, a plasticizer, a lubricant, an antimicrobial agent, a hydrophilicity-imparting agent or a hypochromic colorant, depending on the purpose and usage.

Also, the mold may be formed of silicone rubber.

In this case, fabrication of the mold can be facilitated as well as the thermoplastic material can intensely be heated by electromagnetic wave including a wavelength range of 0.78 to 2 µm, which has been mentioned above, with the mold being almost not heated.

Also, a hardness of the silicone rubber is preferably 25 to 80 in a measurement using a JIS A spring hardness tester.

Also, the molding apparatus can be configured so that the molding apparatus includes vacuum means for vacuuming the cavity, and the pressure inside the cavity is decreased by the vacuum means to be lower than the pressure outside the pair of mold parts included in the mold to generate a suction force between the pair of mold parts, enabling the pair of mold parts to be brought close to each other when the thermoplastic material is melt.

Also, in the thermoplastic molded product manufacturing method, vacuum means for vacuuming the cavity can be used, and the pressure inside the cavity can be decreased by the vacuum means to be lower than the pressure outside the pair of mold parts included in the mold to generate a suction force between the pair of mold parts, enabling the pair of mold parts to be brought close to each other when the thermoplastic material is melt.

In these cases, the pair of mold parts can easily be brought close to each other by the suction force (mold clamping force) generated by the vacuum means. Also, as a result of the pair of mold parts being brought close to each other using the suction force, the melted thermoplastic material can easily be made to spread over the cavity entirely.

Also, the pair of mold parts can forcibly be brought close to each other by applying an external force to the pair of mold part, other than using the suction force generated by the vacuum means.

Also, the pair of mold parts can be configured so that at respective original positions of the pair of mold parts before being brought close to each other, in a fitting target recess portion provided in one of the pair of mold parts, a fitting projection portion provided in the other of the pair of mold parts is fitted, and an entire circumference of a partition surface formed between the pair of mold parts by the fitting projection portion and the fitting target recess portion is enclosed.

In this case, it is possible to easily prevent leakage of the thermoplastic material from a gap formed in the partition surface in order to bring the pair of mold parts close to each other.

Also, the pair of mold parts can be configured so that at respective original positions of the pair of mold parts before being brought close to each other, in a cavity forming recess portion provided in one of the pair of mold parts, a cavity forming projection portion provided in the other of the pair of mold parts is placed, and the entire circumference of the partition surface formed between the pair of mold parts is enclosed by a resin tape attached to the entire circumference of the partition surface.

In this case, also, it is possible to easily prevent leakage of the thermoplastic material from a gap formed in the partition surface in order to bring the pair of mold parts close to each other.

Also, the one of the pair of mold parts can include a cavity forming projection portion that molds a back surface of the molded product, an annular fitting recess portion formed at an entire circumference of an outer edge portion of the cavity forming projection portion, and an annular outer circumferential projection portion formed so as to project from an entire circumference of an outer edge portion of the annular fitting recess portion, and the other of the pair of mold part can include a cavity forming recess portion that allows the cavity forming projection portion to be placed inside and molds a design surface of the molded product, and an annular inner circumferential projection portion that projects from an entire circumference of an outer edge portion of the cavity forming recess portion, is fitted on an inner circumferential surface of the annular outer circumferential projection portion and thereby placed in the annular fitting recess portion. At the respective original positions of the pair of mold parts before being brought close to each other, the cavity can be formed so as to continuously extend between an extremity surface of the cavity forming projection portion and a bottom surface of the cavity forming recess portion, between an outer circumferential surface of the cavity forming projection portion and an inner circumferential surface of the annular inner circumferential projection portion, and between a bottom surface of the annular fitting recess portion and an extremity surface of the annular inner circumferential projection portion. In the one of the pair of mold parts, a suction port that opens in the extremity surface of the cavity forming projection portion, and suction gates that open in the bottom surface of the annular fitting recess portion can be formed, and the suction port and the suction gates can be brought into communication with a vacuuming path for vacuuming using the vacuum means.

In this case, as a result of an outer circumferential surface of the annular inner circumferential projection portion of the other of the pair of mold parts being fitted on an inner circumferential surface of the annular outer circumferential projection portion of the one of the pair of mold parts, it is possible to easily prevent leakage of the thermoplastic material from the gap formed in the partition surface in order to bring the pair of mold parts close to each other.

Also, as a result of the cavity being vacuumed via the suction port and the suction gates, a suction force can easily be generated between the pair of mold parts, enabling the melted thermoplastic material to spread over the cavity entirely.

Also, when the particulate thermoplastic material placed in the cavity is melted, the suction port can receive an excess of the melted thermoplastic material that has run over from the cavity.

Also, the suction port can double as a supply port for supplying the particulate thermoplastic material into the cavity.

In this case, when placing thermoplastic material in the cavity, particulate thermoplastic material can be supplied from the suction port with the pair of mold parts closed.

Also, the pair of mold parts can be configured so that the pair of mold parts are brought close to each other until the bottom surface of the annular fitting recess portion in the one of the pair of mold parts and the extremity surface of the annular inner circumferential projection portion in the other of the pair of mold parts butt each other, and the thermoplastic material is supplied from an extra space formed between the bottom surface of the annular fitting recess portion and the extremity surface of the annular inner circumferential projection portion to a standing wall space formed between the outer circumferential surface of the cavity forming projection portion and the inner circumferential surface of the annular inner circumferential projection portion to mold the molded product.

In this case, a dimensional accuracy of the resulting molded product can be stabilized. Also, an extra amount of thermoplastic material used for molding can be reduced as much as possible, enabling reduction in used amount of thermoplastic material.

Also, the suction gates preferably each have a cross-sectional area of a flow path that is smaller than that of the suction port. Also, the suction gates can be formed so as to open in the bottom surface of the annular fitting recess portion at positions facing the bottom surface of the cavity forming recess portion and positions facing the annular inner circumferential projection portion.

In this case, clogging of the suction gates with the particulate thermoplastic material can be made to be difficult to occur, enabling the thermoplastic material to stably spread to an end portion of the cavity.

Also, it is preferable that positions where the suction gates open in the bottom surface of the annular fitting recess portion be arranged in at least one or more pairs of positions facing each other via a center part of the annular shape. Consequently, suction from the suction port can be performed with balance in a circumferential direction.

Also, in the molding apparatus, the electromagnetic wave irradiation means is configured to provide electromagnetic wave irradiation from an outer surface of the other of the pair of mold parts and the cavity forming recess portion side of the particulate thermoplastic material placed in the cavity is thereby melted and spread first, thereby preventing the suction gates from being occluded, enabling vacuuming by the vacuum means to be continued until the thermoplastic material is spread to the cavity entirely.

Also, in the thermoplastic molded product manufacturing method, electromagnetic wave irradiation from the electromagnetic wave irradiation means is provided on the outer surface of the other of the pair of mold parts and the cavity forming recess portion side of the particulate thermoplastic material placed in the cavity is thereby melted and spread first, thereby preventing the suction gates from being occluded, enabling vacuuming by the vacuum means to be continued until the thermoplastic material is spread to the cavity entirely.

In these cases, it is possible to effectively prevent the suction gates from being occluded and to make a suction force be exerted between the pair of mold parts until the thermoplastic material is spread to the cavity entirely.

Also, in the molding apparatus, the electromagnetic wave irradiation means can be configured so as to partially provide electromagnetic wave irradiation while sequentially and relatively moving over the outer surface of the other of the pair of mold parts from one side to another side, enabling the thermoplastic material to be sequentially spread from the one side to the other side of the cavity.

Also, in the thermoplastic molded product manufacturing method, electromagnetic wave irradiation from the electromagnetic wave irradiation means can be partially provided while sequentially moving over parts of the outer surface of the other of the pair of mold parts from the one side to the other side, enabling the thermoplastic material to be sequentially spread from the one side to the other side of the cavity.

In these cases, the thermoplastic material are partially melted in the cavity in a sequential manner, enabling the thermoplastic material to stably spread over the cavity entirely.

### EMBODIMENTS

Examples of a molding apparatus and a thermoplastic molded product manufacturing method according to the present invention will be described below with reference to the drawings.

### (Example 1)

A molding apparatus (light-irradiation molding apparatus) 1 according to the present example includes: a mold including a cavity 20 inside, the cavity 20 being configured to have a variable volume and allowing thermoplastic resin 6, which is solid thermoplastic material, to be placed therein; heating means for heating and thereby melting the thermoplastic resin 6 placed in the cavity 20; and pressure application means for applying pressure to the mold so as to reduce a volume of the cavity 20.

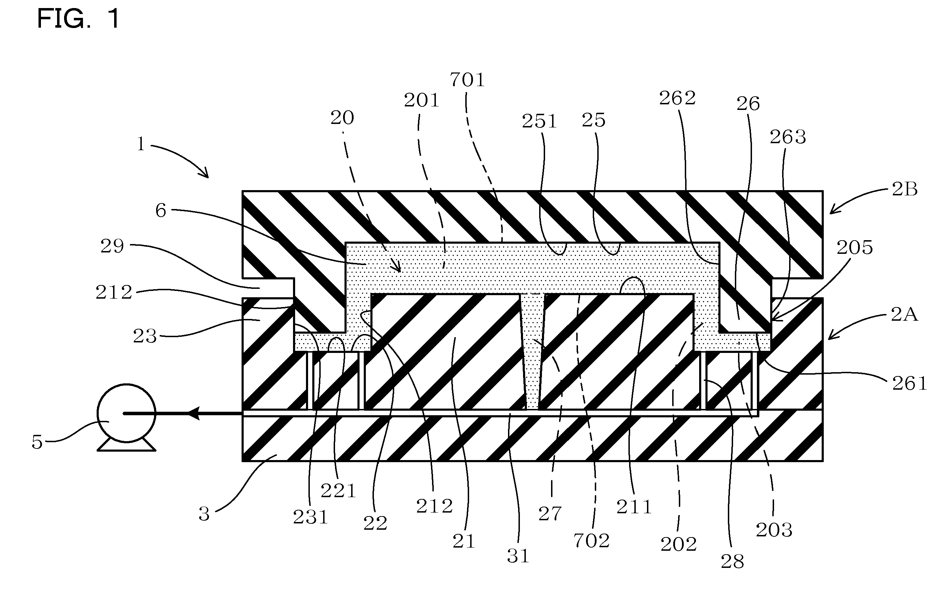

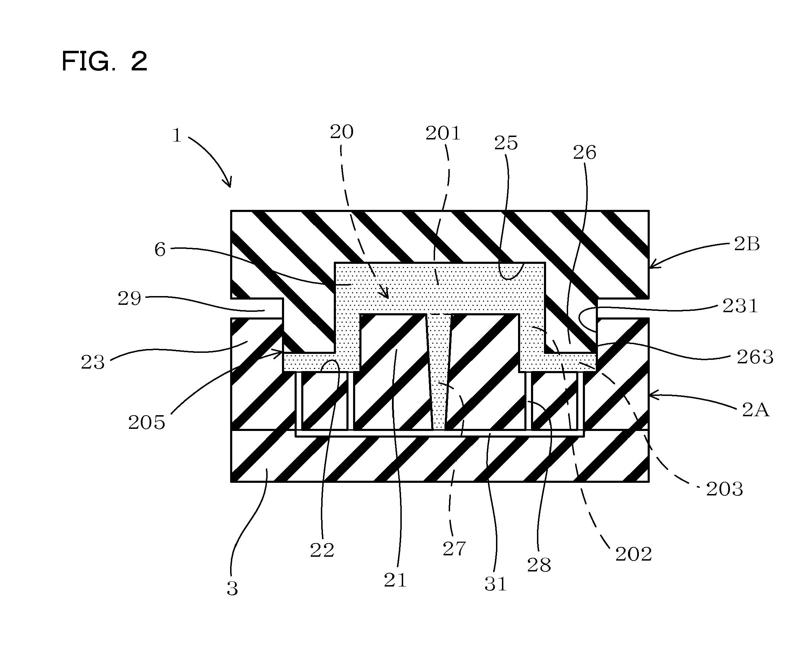

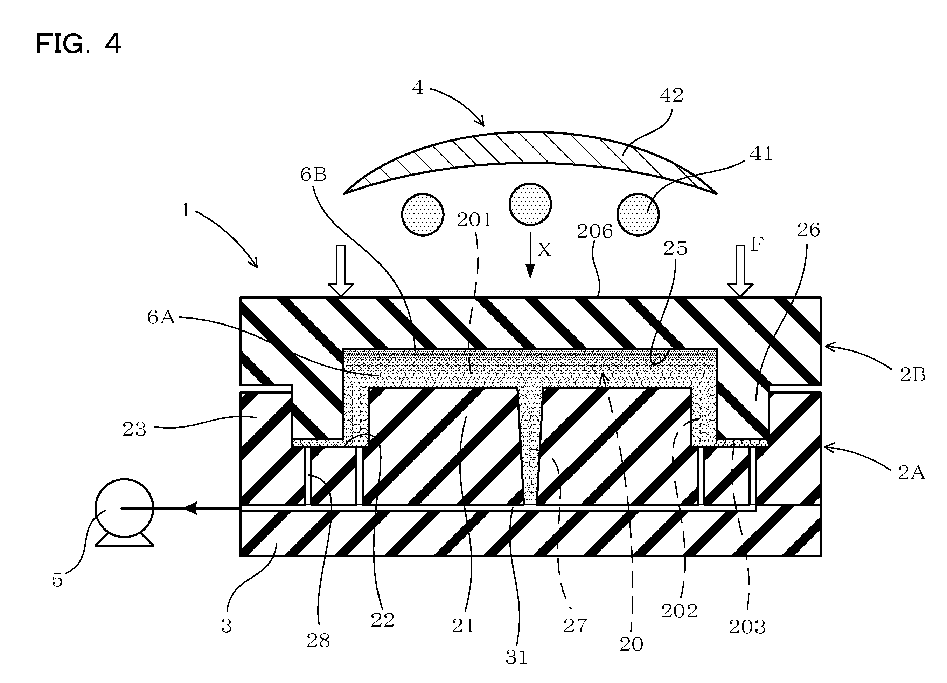

As shown in Figures 1 and 2, the mold according to the present example, includes a pair of rubber mold portions 2A and 2B each including rubber material having the property of transmitting light X and forming the cavity 20 on the respective opposing sides to be fitted together. As shown in Figure 4, the heating means according to the present example is light irradiation means 4 for irradiating the particulate thermoplastic resin 6 placed in the cavity 20 with light X through a surface of the pair of rubber mold portions 2A and 2B. The pressure application means according to the present example is vacuum means 5 for depressurizing the cavity 20.

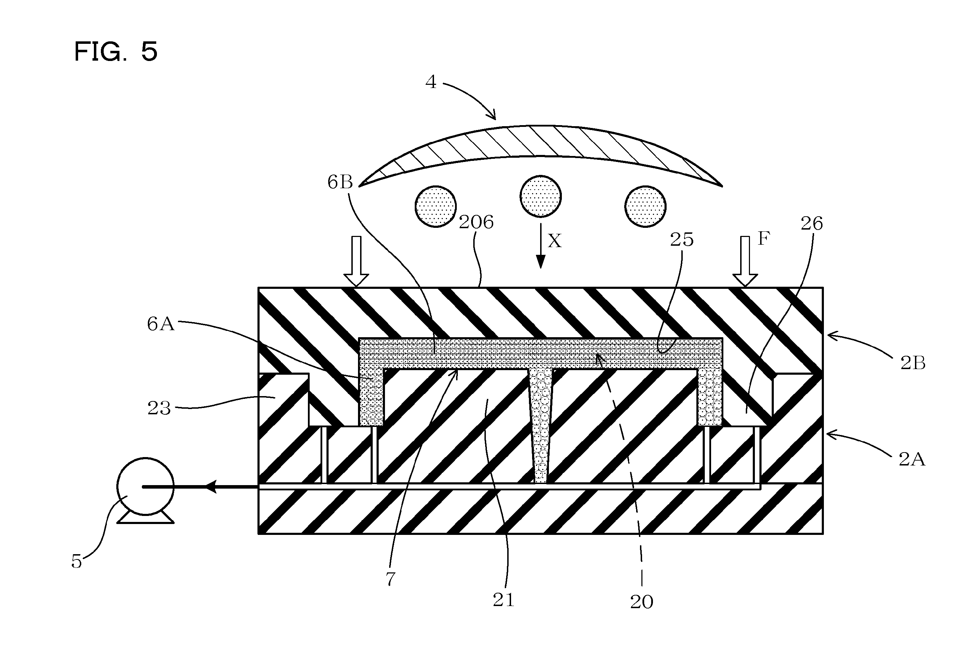

As shown in Figures 4 and 5, the light-irradiation molding apparatus 1 is configured to, while melting the thermoplastic resin 6 placed in the cavity 20 by means of light X provided from the light irradiation means 4, bring the pair of rubber mold portions 2A and 2B close to each other to reduce the volume of the cavity 20, and mold a molded product 7 of the thermoplastic resin 6, which is a thermoplastic molded product, in the cavity 20 with the volume reduced.

Figures 1 and 2 each show a state in which the pair of rubber mold portions 2A and 2B are at respective original positions P1. Figure 4 shows a state in which the pair of rubber mold portions 2A and 2B are slightly brought close to each other. Figure 5 shows a state in which the pair of rubber mold portions 2A and 2B mold a molded product 7 at respective positions P2 where the pair of rubber mold portions 2A and 2B are brought closest to each other.

The light-irradiation molding apparatus 1 and a thermoplastic molded product manufacturing method (light-irradiation molding method) according to the present example will be described in detail below with reference to Figures 1 to 8.

The pair of rubber mold portions 2A and 2B each include transparent or semitransparent silicone rubber, which is rubber material. The pair of rubber mold portions 2A and 2B can be fabricated by placing a master model (e.g., hand-made original) of a molded product 7 to be molded in liquid silicone rubber, making the silicone rubber cure and taking the master model out from the cured silicone rubber. Also, since the pair of rubber mold portions 2A and 2B are made of rubber, a partition surface (parting surface) 205 (see Figures 1 and 2) via which mold opening is performed for taking out a resulting molded product 7 can simply and arbitrarily be formed.

For the thermoplastic resin 6, particles of an ABS resin, which is amorphous thermoplastic resin as well as a rubber-modified thermoplastic resin, are used. For the thermoplastic resin 6, one with a particulate diameter of 1 to 3000 µm can be used. Also, the particulate thermoplastic resin 6 includes fine pellets of thermoplastic resin 6 with a bulk specific gravity of around 0.6.

As shown in Figure 4, the light irradiation means 4 is configured to generate light X including a wavelength range of 0.78 to 2 µm. The light irradiation means 4 is configured using a halogen lamp that generates light X including a wavelength range of 0.78 to 2 µm (substantially corresponding to the wavelength range of near-infrared light). For the halogen lamp, one having a light intensity peak (around 0.9 µm in the present example) within the wavelength range of 0.78 to 2 µm was used. The halogen lamp is configured using a light source 41 and a reflector 42 that collects and reflects light X emitted from the light source 41.

The light-irradiation molding apparatus 1 is one that can heat thermoplastic resin 6 placed in the cavity 20 by means of the light irradiation means 4 intensely compared to the pair of rubber mold portions 2A and 2B each including silicone rubber so as to mold a molded product 7 with a stable dimensional accuracy.

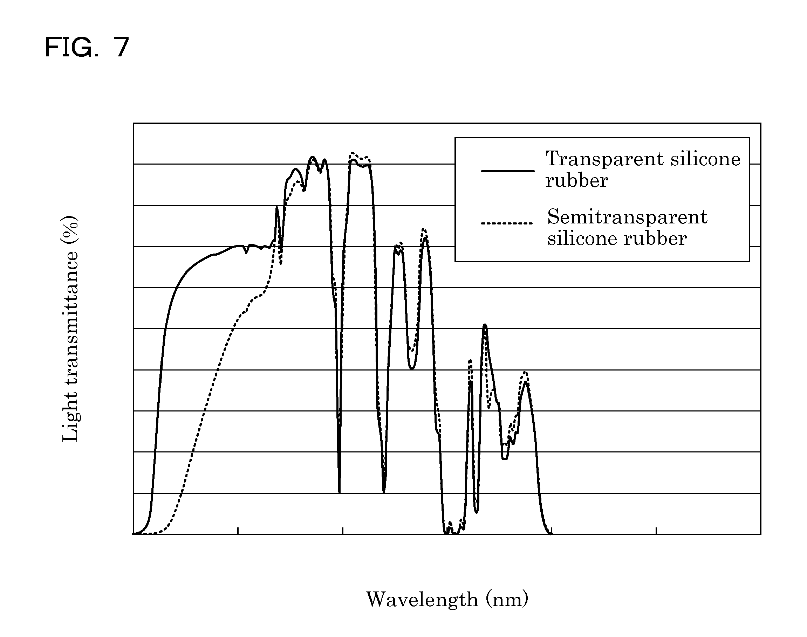

Figure 7 is a graph indicating respective transmittances of a transparent silicone rubber and a semitransparent silicone rubber for light X with wavelength (nm) as the abscissa axis and light X transmittance (%) as the ordinate axis. The figure indicates that each silicone rubber transmits light X having wavelengths between 200 to 2200 (nm). Thus, upon irradiation of a surface of the rubber mold portions 2A and 2B made of silicone rubber with near-infrared light, which falls within such wavelength range, a majority of the near-infrared light can be transmitted by the rubber mold portions 2A and 2B and absorbed by the thermoplastic resin 6 in the cavity 2.

As shown in Figure 1, the light-irradiation molding apparatus 1 includes vacuum means 5 for vacuuming the cavity 20, as pressure application means. The vacuum means 5 is a pump connected to the pair of rubber mold portions 2A and 2B, and is configured to vacuum the cavity 20 in which the thermoplastic resin 6 is placed and thereby bring the inside of the cavity 20 into a vacuum state. As shown in Figures 4 and 5, the light-irradiation molding apparatus 1 is configured to decrease a pressure inside the cavity 20 to be lower than a pressure outside the pair of rubber mold portions 2A and 2B to generate a suction force (mold clamping force) F in the pair of rubber mold portions 2A and 2B, thereby the pair of rubber mold portions 2A and 2B coming close to each other when the thermoplastic resin 6 is melted.

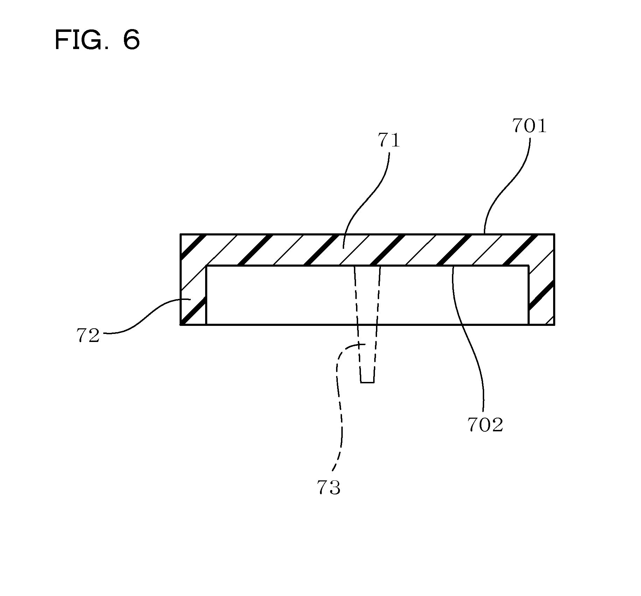

As shown in Figure 6, a molded product 7 molded in the light-irradiation molding apparatus 1 includes a body portion 71 and a standing wall portion 72 formed so as to stand substantially perpendicularly or at an angle relative to the body portion 71. For the standing wall portion 72 according to the present example, one standing from an entire circumference of an outer edge portion of the body portion 71 was employed. Besides such one, a molded product 7 can be one with a standing wall portion 72 standing substantially perpendicularly or at an angle relative to an arbitrary part of the body portion 71. Here, a molded product 7 can be obtained by cutting off a molded part 73 molded in a later-described suction port 27.

As shown in Figures 1 and 2, the one-side rubber mold portion 2A, which is one of the pair of rubber mold portions 2A and 2B, includes a cavity forming projection portion 21 that molds a back surface 702 of a molded product 7, an annular fitting recess portion 22 formed at an entire circumference of an outer edge portion of the cavity forming projection portion 21, and an annular outer circumferential projection portion 23 formed so as to project from an entire circumference of an outer edge portion of the annular fitting recess portion 22. The other-side rubber mold portion 2B, which is the other of the pair of rubber mold portions 2A and 2B, includes a cavity forming recess portion 25 that allows the cavity forming projection portion 21 to be placed inside and molds a design surface 701 of the molded product 7, and an annular inner circumferential projection portion 26 that projects from an entire circumference of an outer edge portion of the cavity forming recess portion 25, is fitted on an inner circumferential surface 231 of the annular outer circumferential projection portion 23 and thereby placed in the annular fitting recess portion 22.

A fitting target recess portion in the rubber mold portions 2A and 2B is formed by the annular fitting recess portion 22 and the annular outer circumferential projection portion 23 of the one-side rubber mold portion 2A, and a fitting projection portion in the rubber mold portions 2A and 2B is formed by the annular inner circumferential projection portion 26 of the other-side rubber mold portion 2B.

At respective original positions P1 of the pair of rubber mold portions 2A and 2B before being brought close to each other, an outer circumferential surface 263 of the annular inner circumferential projection portion 26 of the other-side rubber mold portion 2B is fitted on an inner circumferential surface 231 of the annular outer circumferential projection portion 23. Before and after the pair of rubber mold portions 2A are 2B are brought close to each other, an entire circumference of the partition surface 205 formed between the pair of rubber mold portions 2A and 2B is enclosed by the outer circumferential surface 263 of the annular inner circumferential projection portion 26 and the inner circumferential surface 231 of the annular outer circumferential projection portion 23.

As a result of the outer circumferential surface 263 of the annular inner circumferential projection portion 26 of the other-side rubber mold portion being fitted on the inner circumferential surface 231 of the annular outer circumferential projection portion 23 of the one-side rubber mold portion 2A, leakage of melted thermoplastic resin 6B from a gap 29 formed in the partition surface 205 in order to bring the pair of rubber mold portions 2A and 2B close to each other can easily be prevented.

As shown in Figures 1 and 2, at the respective original positions P1 of the pair of rubber mold portions 2A and 2B before being brought close to each other, the cavity 20 is formed so as to continuously extend between an extremity surface 211 of the cavity forming projection portion 21 and a bottom surface 251 of the cavity forming recess portion 25, between an outer circumferential surface 212 of the cavity forming projection portion 21 and an inner circumferential surface 262 of the annular inner circumferential projection portion 26, and between a bottom surface 221 of the annular fitting recess portion 22 and an extremity surface 261 of the annular inner circumferential projection portion 26.

As shown in Figures 4 and 5, the pair of rubber mold portions 2A and 2B are configured so that when the thermoplastic resin 6 placed in the cavity 20 melts, the bottom surface 221 of the annular fitting recess portion 22 of the one-side rubber mold portion 2A and the extremity surface 261 of the annular inner circumferential projection portion 26 of the other-side rubber mold portion 2B are brought close to each other until the bottom surface 221 and the extremity surface 261 butt each other. When the pair of rubber mold portions 2A and 2B are brought close to each other to mold a molded product 7 in the cavity 20, thermoplastic resin 6 is supplied from a body space 201 formed between the cavity forming projection portion 21 and the cavity forming recess portion 25 and an extra space 203 formed between the bottom surface 221 of the annular fitting recess portion 22 and the extremity surface 261 of the annular inner circumferential projection portion 26 to a standing wall space 202 formed between the outer circumferential surface 212 of the cavity forming projection portion 21 and the inner circumferential surface 262 of the annular inner circumferential projection portion 26. In Figures 4 and 5, reference numeral 6A denotes particulate thermoplastic resin and reference numeral 6B denote melted thermoplastic resin.

As shown in Figures 1 and 2, in the one-side rubber mold portion 2A, a suction port 27 that opens in the extremity surface 211 of the cavity forming projection portion 21, and suction gates 28 that open in the bottom surface 221 of the annular fitting recess portion 22 are formed therethrough. The suction port 27 doubles as a function of a supply port for supplying the particulate thermoplastic resin 6A into the cavity 20. The suction port 27 also functions as a space that when the particulate thermoplastic resin 6A placed in the body space 201 melts, receives an excess of the melted thermoplastic resin 6B that has run over from the body space 201.

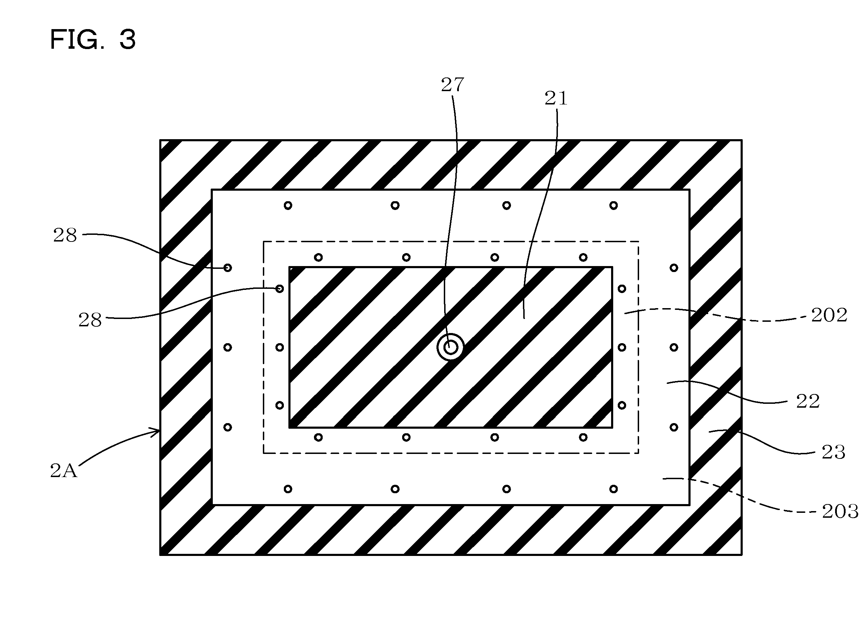

As described above, the molded product 7 molded in the present example is one in which the standing wall portion 72 stands substantially perpendicularly or at an angle from the entire circumference of the body portion 71. As shown in Figure 3, the suction gates 28 are formed so as to open at a plurality of sites including positions facing the bottom surface 251 of the cavity forming recess portion 25 and positions facing the annular inner circumferential projection portion 26 in the bottom surface 221 of the annular fitting recess portion 22. Figure 3 shows a state in which the suction port 27 and the plurality of suction gates 28 are formed in the one-side rubber mold portion 2A.

The suction gates 28 can arbitrarily be formed in conformity to position(s) where standing wall portion(s) 72 are formed.

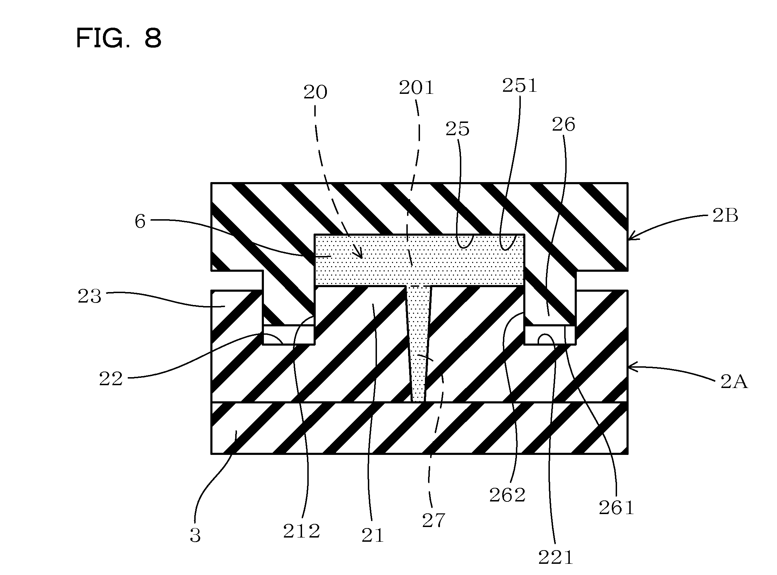

For example, where only a pair of standing wall portions 72 that face each other are formed, suction gates 28 that open only at a position facing the bottom surface 251 of the cavity forming recess portion 25 and a position facing the annular inner circumferential projection portion 26 in each part of the bottom surface 221 of the annular fitting recess portion 22 where a standing wall portion 72 are formed. As shown in Figure 8, in a remaining part of the bottom surface 221 of the annular fitting recess portion 22 where no standing wall portion 72 is formed, no suction gates 28 may be formed at a position facing the bottom surface 251 of the cavity forming recess portion 25 and a position facing the annular inner circumferential projection portion 26. In this case, in the remaining part of the bottom surface 221 of the annular fitting recess portion 22 where no standing wall portion 72 is formed, the outer circumferential surface 212 of the cavity forming projection portion 21 of the one-side rubber mold portion 2A and the inner circumferential surface 262 of the annular inner circumferential projection portion 26 of the other-side rubber mold portion 2B can be brought into contact with each other so as to prevent melted thermoplastic resin 6 from flowing into between the extremity surface 261 of the annular inner circumferential projection portion 26 and the bottom surface 221 of the annular fitting recess portion 22.

As shown in Figures 1 and 2, the suction gates 28 each have a cross-sectional area of a flow path that is smaller than that of the suction port 27. The suction gates 28 are formed so as to have a cross-sectional area of a flow path that is smaller than the respective particles of the thermoplastic resin 6A in order to, when sucking a gas (air) in the cavity 20 via the vacuum means 5, prevent the particulate thermoplastic resin 6A in the cavity 20 from being sucked.

A backup plate 3 is stacked on the side of the one-side rubber mold portion 2A that does not face the other-side rubber mold portion 2B. Then, between the one-side rubber mold portion 2A and the backup plate 3, a vacuuming path 31 for vacuuming via the vacuum means 5 is formed. The vacuuming path 31 is in communication with the suction port 27 and the plurality of suction gates 28.

As shown in Figures 4 and 5, the light irradiation means 4 is disposed so as to face an outer surface 206 formed in parallel to the bottom surface 251 of the cavity forming recess portion 25 of the other-side rubber mold portion 2B. The light-irradiation molding apparatus 1 can melt the cavity forming recess portion 25 side of the particulate thermoplastic resin 6A placed in the cavity 20 first by light X provided from the light irradiation means 4 to the outer surface 206 of the other-side rubber mold portion 2B. Then, since the suction port 27 and the plurality of suction gates 28 are formed in the one-side rubber mold portion 2A positioned on the side opposite to the light irradiation means 4, the suction port 27 and the suction gates 28 are not occluded until the entire particulate thermoplastic resin 6A is melted. Thus, the light-irradiation molding apparatus 1 can prevent occlusion of the suction gates 28, enabling the vacuuming by the vacuum means 5 to be continued until the melted thermoplastic resin 6B is spread to the cavity 20 entirely.

Figures 4 and 5 each show a state in which light X is provided by the light irradiation means 4 to the pair of rubber mold portions 2A and 2B with the one-side rubber mold portion 2A including the suction port 27 arranged on the lower side, from above the other-side rubber mold portion 2B. However, it is possible that: the pair of rubber mold portions 2A and 2B are arranged so that the one-side rubber mold portion 2A and the other-side rubber mold portion 2B are combined in a horizontal direction; and light X is provided in the horizontal direction. It is also possible that: light X is provided by the light irradiation means 4 to the pair of rubber mold portions 2A and 2B arranged with the other-side rubber mold portion 2B on the lower side, from above the one-side rubber mold portion 2A.

Although not shown, in at least one of the pair of rubber mold portions 2A and 2B, a cavity forming surface for forming the cavity 20 can be formed by providing a substance with high light absorbency relative to a general portion formed of rubber material. For example, a surface layer with high light absorbency can be formed on each of respective parts of the pair of rubber molds 2A and 2B that are in contact with the cavity 20 to make the surface layer absorb light provided from the light irradiation means 4. In this case, the thermoplastic resin 6 in the cavity 20 can be heated and melted by heat transmission from the surface layer. Also, if an apparatus that provides electromagnetic wave irradiation other than light is used as the heating means, the surface layer can be formed by a material that generates heat upon absorbing the electromagnetic wave other than light. In this case, also, operations and effects similar to the above can be provided by the surface layer.

Also, the light-irradiation molding apparatus 1 can be provided with cooling means for cooling the thermoplastic resin 6 via the pair of rubber molds 2A and 2B. The cooling means can be, for example, an air blower that makes air blow against the pair of rubber mold portions 2A and 2B. In this case, the air blower can further be combined with a heat exchanger to make cool air blow, or can also be made to make a refrigerant, for example, powdered dry ice, blow.

Next, operations and effects of a light-irradiation molding method using the light-irradiation molding apparatus 1 will be described.

First, as a resin placement step (a placement step), particulate thermoplastic resin 6A is placed in the cavity 20 formed between the pair of rubber mold portions 2A and 2B. At this stage, the thermoplastic resin 6A can be supplied from the suction port (supply port) 27 formed in the one-side rubber mold portion 2A into the cavity 20 between the pair of rubber mold portions 2A and 2B mutually combined. Also, the thermoplastic resin 6A can be placed in the cavity forming recess portion 25 of the other-side rubber mold portion 2B in an opened state. In this case, the one-side rubber mold portion 2A is combined with the other-side rubber mold portion 2B with the thermoplastic resin 6A placed therein.

Also, when the particulate thermoplastic resin 6A is placed in the cavity 20, gaps are formed between surfaces forming the cavity 20 and the thermoplastic resin 6A and among pieces of the thermoplastic resin 6A.

In particular, where lump thermoplastic resin 6 is used, the pair of rubber mold portions 2A and 2B can be combined after placing the thermoplastic resin 6 on the cavity forming recess portion 25 or the cavity forming projection portion 21. Also, particulate thermoplastic resin 6 can be used in combination with lump thermoplastic resin 6.

Also, as shown in Figures 1 and 2, when the pair of rubber mold portions 2A and 2B are combined, the entire circumference of the partition surface 205 formed between the pair of rubber mold portions 2A and 2B is enclosed by the inner circumferential surface 231 of the annular outer circumferential projection portion 23 of the one-side rubber mold portion 2A and the outer circumferential surface 263 of the annular inner circumferential projection portion 26 of the other-side rubber mold portion 2B.

Next, as a resin molding step (a heating step and a pressure application step), as shown in Figure 1, vacuuming of the cavity 20 by the vacuum means 5 from the vacuuming path 31 via the suction port 27 and the plurality of suction gates 28 is started. At this stage, air is sucked from the gaps formed among the pieces of the particulate thermoplastic resin 6A in the cavity 20 and a suction force F that brings the pair of rubber mold portions 2A and 2B close to each other is exerted on the pair of rubber mold portions 2A and 2B, and pressure is applied among the particles of the particulate thermoplastic resin 6A.

Then, as shown in Figure 4, with the vacuuming by the vacuum means 5 continued, the outer surface 206 of the other-side rubber mold portion 2B is irradiated with light X including a wavelength range of 0.78 to 2 µm by the light irradiation means 4. At this stage, a majority of the light X is transmitted by the other-side rubber mold portion 2B and absorbed by the thermoplastic resin 6A in the cavity 20. Then, a part of the thermoplastic resin 6A positioned in the vicinity of the bottom surface 251 of the cavity forming recess portion 25 of the other-side rubber mold portion 2B, which is arranged on the side close to the light irradiation means 4, is intensely heated. Particles of the particulate thermoplastic resin 6A placed in the cavity 20 that are positioned in the vicinity of the bottom surface 251 of the cavity forming recess portion 25 of the other-side rubber mold portion 2B in the body space 201 of the cavity 20 melt first.

The application of pressure to the pair of rubber molds 2A and 2B by the vacuum means 5 is performed before the thermoplastic resin 6 starts melting.

At this stage, in the cavity 20, voids among the particles of the particulate thermoplastic resin 6A are in a substantially vacuum state. Then, as a result of pressure being applied to the pair of rubber mold portions 2A and 2B by a difference in pressure between the inside and the outside of the cavity 20, pressure is exerted among the particles of the particulate thermoplastic resin 6A. In this state, upon the particulate thermoplastic resin 6A in the body space 201 being heated and melted by the light irradiation means 4, the pressure exerted among the particles is released, whereby a volume of the body space 201 is reduced by the suction force F exerted on the pair of rubber mold portions 2A and 2B. Consequently, the pair of rubber mold portions 2A and 2B are brought close to each other by the amount of the reduction in volume of the body space 201.

Also, the vacuuming of the cavity 20 by the vacuum means 5 is still continued after the thermoplastic resin 6A in the cavity 20 started melting.

As shown in Figure 5, the particles of the particulate thermoplastic resin 6A in the cavity 20 melt sequentially in such a manner that particles positioned in the vicinity of the bottom surface 251 of the cavity forming recess portion 25 in the body space 201 of the cavity 20 melts first, and then particles positioned in the vicinity of the extremity surface 211 of the cavity forming projection portion 21 melts. Then, the particulate thermoplastic resin 6A placed in the standing wall space 202 and the extra space 203 of the cavity 20 are maintained in a particulate state without melting until substantially the entire part of the particulate thermoplastic resin 6A placed in the body space 201 melts. Consequently, the vacuuming of the body space 201 of the cavity 20 from the voids formed among the pieces of the particulate thermoplastic resin 6A placed on the suction port 27 and the plurality of suction gates 28 is continued.

When the particulate thermoplastic resin 6A in the body space 201 has melted and the pair of rubber mold portions 2A and 2B have been brought close to each other, the particulate thermoplastic resin 6A placed in the standing wall space 202 and the extra space 203 melt. At this stage, the thermoplastic resin 6B in the extra space 203 that has melted is supplied to the standing wall space 202 when the volume of the extra space 203 is reduced by the pair of rubber mold portions 2A and 2B being brought close to each other. Also, an excess of the melted thermoplastic resin 6B in the body space 201 is supplied to the standing wall space 202.

Also, as a result of the thermoplastic resin 6A melting, almost the entire voids formed in the cavity 20 are eliminated.

Then, when the particulate thermoplastic resin 6A in the standing wall space 202 melts, an insufficient amount of thermoplastic resin 6 in the standing wall space 202 can be supplemented from the extra space 203 and the body space 201, enabling avoidance of reduction in thickness of the standing wall portion 72 molded in the standing wall space 202. Also, when the thermoplastic resin 6 placed in the cavity 20 melts, the pair of rubber mold portions 2A and 2B come close to each other until the bottom surface 221 of the annular fitting recess portion 22 of the one-side rubber mold portion 2A and the extremity surface 261 of the annular inner circumferential projection portion 26 of the other-side rubber mold portion 2B butt each other. Then, between the bottom surface 221 of the annular fitting recess portion 22 and the extremity surface 261 of the annular inner circumferential projection portion 26, a molded product of thermoplastic resin in the form of a thin sheet (burr-like) is molded.

As described above, in the resin molding step, the vacuuming by the vacuum means 5 is continued until the melted thermoplastic resin 6B is spread to the cavity 20 entirely, enabling the melted thermoplastic resin 6B to spread over the cavity 20 entirely with the volume reduced.

Next, as a resin cooling step, the state in which the melted thermoplastic resin 6B has filled the cavity 20 in the pair of rubber mold portions 2A and 2B is maintained. At this stage, the melted thermoplastic resin 6B is cooled and solidified, whereby a body portion 71 is molded in the body space 201 and a standing wall portion 7 is molded in the standing wall space 202. Thus, a molded product 7 of the thermoplastic resin 6 can be obtained.

In the resin cooling step, also, the pressure application step is continuously performed to continue the vacuuming of the cavity 20 by the vacuum means 5. Then, in the resin cooling step, the vacuuming is continued until completion of the cooling of the molded product 7.

Consequently, the state in which the volume of the cavity 20 has been reduced is maintained from the start of melting of the thermoplastic resin 6 until the melted thermoplastic resin 6 is cooled and solidified. Thus, the shape of the cavity 20 with the volume reduced can be maintained until the thermoplastic resin 6 is solidified. Therefore, leakage of the melted thermoplastic resin 6 and deformation of the thermoplastic resin 6 during cooling and solidification can be minimized, enabling a molded product 7 of the thermoplastic resin 6 having a shape following the shape of the cavity 20 after the volume reduction to be molded with good accuracy.

The present example indicates a case where the vacuuming of the cavity 20 by the vacuum means 5 is continued also in the resin cooling step. In a way other than this case, the state in which the cavity 20 has been depressurized may be maintained by separating the vacuum means 5 from the vacuuming path 31 after the vacuuming path 31 is occluded. Also, the shape of the cavity 20 with the volume reduced may be maintained by mechanically applying an external force to the pair of rubber mold portions 2A and 2B.

Also, in the present example, since a mold made of rubber is used, a decrease in temperature of the thermoplastic resin 6 is modest compared to those of conventional metal molds. Thus, no warpage or sink marks due to rapid cooling easily occur in the molded product 7. Furthermore, modest cooling with the volume of the cavity 20 reduced enables the following effects to be expected. When a temperature of the thermoplastic resin 6 decreases, a volume thereof also decreases. In this case, along with the decrease in volume of the thermoplastic resin 6, the pair of rubber mold portions 2A and 2B slightly come close to each other, enabling the volume of the cavity 20 to be reduced. Consequently, a molded product 7 of the thermoplastic resin 6 following the shape of the cavity 20 after the volume reduction can be molded with good accuracy.

Subsequently, as a molded product demolding step, the pair of rubber mold portions 2A and 2B are removed, whereby the molded product 7 that has been molded can be demolded.

In the present example, the thermoplastic resin 6 can be heated intensely compared to the rubber mold portions 2A and 2B and thereby melted, and thus, the thermoplastic resin 6 can effectively be heated with an increase in temperature of the rubber mold portions 2A and 2B suppressed. Therefore, when molding a molded product 7 of the thermoplastic resin 6, deterioration of the rubber mold portions 2A and 2B by heat can effectively be prevented.

Also, since a molded product 7 is molded by reducing the volume of the cavity 20, there is no need to charge melted thermoplastic resin 6B into the cavity 20. Also, there is no need for apparatuses, such as a resin injection nozzle, for melting the thermoplastic resin 6 in advance and injecting the thermoplastic resin 6 into the cavity 20. Also, almost all of the thermoplastic resin 6 placed in the cavity 20 can be used for molding a molded product 7.

Therefore, the light-irradiation molding apparatus 1 according to the present example and the light-irradiation molding method using the same eliminate the need for an apparatus that melts thermoplastic resin 6 in advance and injects the thermoplastic resin 6 into the cavity 20, enabling a molded product 7 to be molded using a small amount of thermoplastic resin 6.

### (Example 2)

The present example indicate some examples of the configuration of the above-described light-irradiation molding apparatus 1 that is different from that of Example 1 described above.

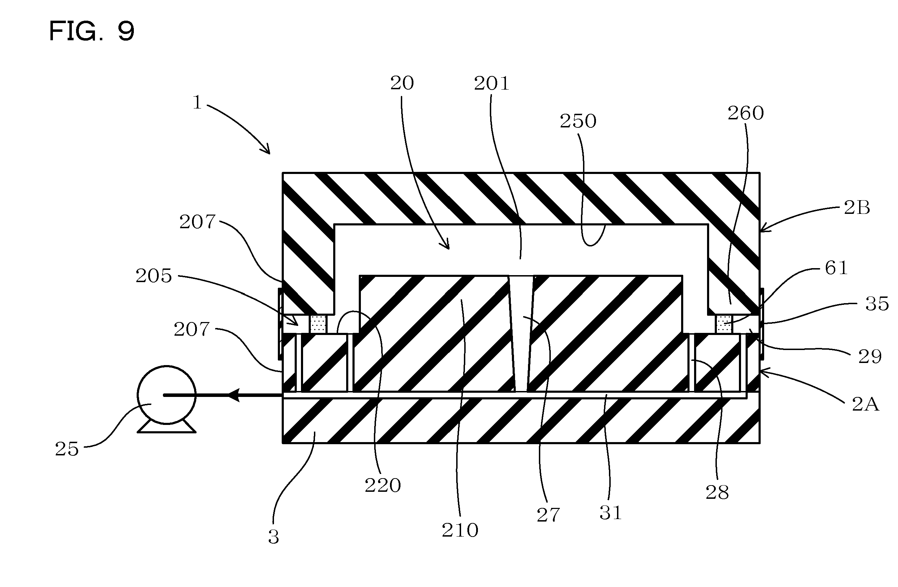

In a way other than enclosure of the entire circumference of the partition surface 205 between the pair of rubber mold portions 2A and 2B by fitting the inner circumferential surface 231 of the annular outer circumferential projection portion 23 and the outer circumferential surface 263 of the annular inner circumferential projection portion 26 together, as shown in Figure 9, the pair of rubber mold portions 2A and 2B can have a structure in which the entire circumference of the partition surface 205 formed between the pair of rubber mold portions 2A and 2B is enclosed by a resin tape 35 attached to the entire circumference of the partition surface 205.

More specifically, in the one-side rubber mold portion 2A, a cavity forming projection portion 210 is formed and at an entire circumference of an outer edge portion thereof, an annular recess portion 220 is formed, and in the other-side rubber mold portion 2B, a cavity forming recess portion 250 is formed and at an entire circumference of an outer edge portion thereof, an annular projection portion 260 is formed.

Then, a gap 29 in the partition surface 205 between the one-side rubber mold portion 2A and the other-side rubber mold portion 2B is occluded by the resin tape 35 attached bridging between a side surface 207 of the one-side rubber mold portion 2A and a side surface 207 of the other-side rubber mold portion 2B. In this case, a spacer 61 of thermoplastic resin 6 having a composition that is the same as that of thermoplastic resin 6 used for molding a molded product 7 is placed between a bottom surface of the annular recess portion 220 and an extremity surface of an annular projection portion 260. Then, a volume of the body space 201 before molding, that is, a volume of the cavity 20 before molding can be set to an intended volume by adjusting a height of the spacer 61. In this case, the resin tape 35 can prevent leakage of the melted thermoplastic resin 6 in the cavity 20 from the gap 29 in the partition surface 205 to the outside.

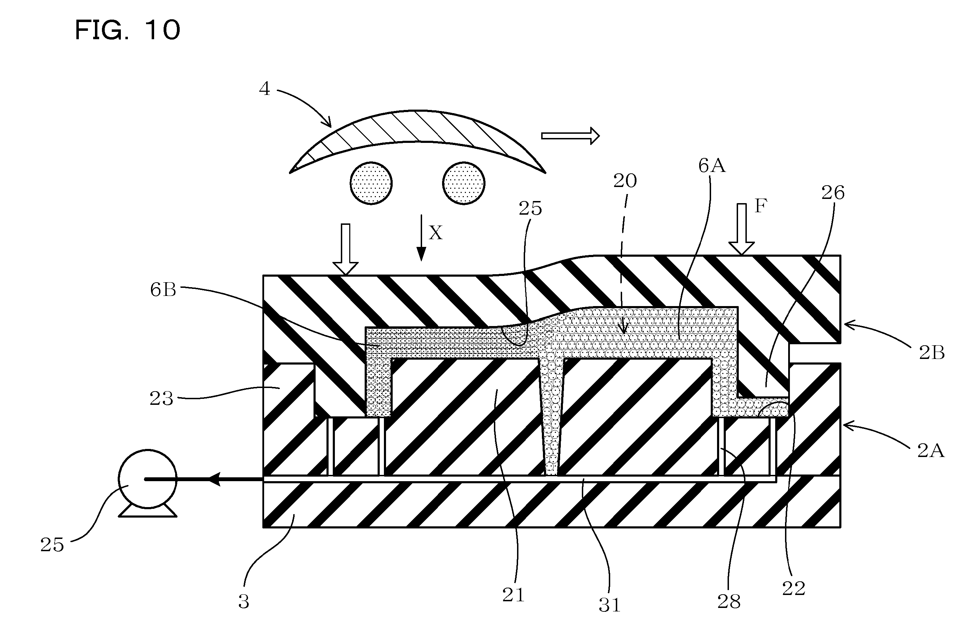

Also, as shown in Figure 10, the above-described light irradiation means 4 can be configured so as to partially provide light X while sequentially moving from one side to the other side along the outer surface 206 formed in parallel with the bottom surface 251 of the cavity forming recess portion 25 of the other-side rubber mold portion 2B, that is, from one side to the other side in a direction perpendicular to a direction in which the pair of rubber mold portions 2A and 2B face each other. Then, the inside of the cavity 20 with the thermoplastic resin 6 placed therein is brought into a vacuum state by the vacuum means 5, and the thermoplastic resin 6 is sequentially heated and thereby melted along one side to the other side of the cavity 20 in the pair of rubber mold portions 2A and 2B by irradiation with light X by the light irradiation means 4 that sequentially moves. Consequently, respective parts of the pair of rubber mold portions 2A and 2B are sequentially brought close to each other along the one-side to the other-side and thermoplastic resin 6 is spread in the cavity 20 entirely, whereby a molded product 7 can be obtained. In this case, as a result of sequentially melting the particulate thermoplastic resin 6A in the cavity 20, the melted thermoplastic resin 6B can stably spread over the cavity 20 entirely.

In the present example, the rest of the configuration of the light-irradiation molding apparatus 1 is similar to that of Example 1 described above, and operations and effects similar to those of Example 1 described above can be obtained.

## Claims

1. A molding apparatus comprising:
a mold including a cavity for placing solid thermoplastic material therein, the cavity being configured to be variable in volume;
heating means for heating and thereby melting the thermoplastic material placed in the cavity; and
pressure application means for applying pressure to the mold so as to reduce the volume of the cavity.

2. The molding apparatus according to claim 1, wherein the pressure application means is configured to continue the application of the pressure to the mold at least from before a start of the melting of the thermoplastic material until a start of a decrease in temperature of the thermoplastic material.

3. The molding apparatus according to claim 2, wherein the pressure application means is configured to continue the application of the pressure to the mold until the melted thermoplastic material is solidified.

4. The molding apparatus according to any one of claims 1 to 3,
wherein the mold is formed to have a structure capable of reducing the volume of the cavity; and
wherein the pressure application means includes an apparatus that depressurizes the cavity.

5. The molding apparatus according to any one of claims 1 to 4, wherein the heating means is an apparatus that provides electromagnetic wave irradiation to be absorbed by at least one of the thermoplastic material and a surface forming the cavity of the mold.

6. The molding apparatus according to any one of claims 1 to 5, further comprising cooling means for cooling the thermoplastic material.

7. A method for manufacturing a thermoplastic molded product, the method comprising:
a placement step of placing solid thermoplastic material in a cavity of a mold;
a heating step of heating and thereby melting the thermoplastic material;
a pressure application step of applying pressure to the mold so as to reduce a volume of the cavity; and
a cooling step of cooling and thereby solidifying the melted thermoplastic material,
wherein the pressure application step is performed when the heating step and the cooling step are performed and is continued until completion of the cooling step.

8. The method for manufacturing a thermoplastic molded product according to claim 7,
wherein the mold is formed to have a structure capable of reducing the volume of the cavity; and
wherein the pressure application step is performed by depressurizing the cavity.
